# EUROPÄISCHE PATENTSCHRIFT

(11) **EP 0 639 598 B1**
(45) Veröffentlichungstag und Bekanntmachung des Hinweises auf die Patenterteilung: **30.07.1997**
(21) Anmeldenummer: 94112191.5
(22) Anmeldetag: 04.08.1994
(51) Int. Cl.: C08G 18/79

(54) **Uretdion Pulverlackvernetzer mit niedriger Schmelzviskosität**
Low melt viscosity crosslinking agents for powder paints containing urethdione groups
Agents de durcissement pour peintures en poudre contenant des groupes d'uréthdione et ayant une basse viscosité à l'état fondu

(30) Priorität: 17.08.1993 DE 4327573
(43) Veröffentlichungstag der Anmeldung: 22.02.1995
(73) Patentinhaber: BAYER AG, 51368 Leverkusen (DE)
(72) Erfinder: Laas, Hans-Josef, Dr., D-50733 Köln (DE); Halpaap, Reinhard, Dr., D-51519 Odenthal (DE); Meier-Westhues, Hans-Ulrich, Dr., D-51379 Leverkusen (DE); Schultz, Wolfgang, D-47829 Krefeld (DE)

(56) Entgegenhaltungen:
- EP-A- 0 431 331
- EP-A- 0 510 476

## Beschreibung

Die Erfindung betrifft neue, Uretdiongruppen aufweisende Polyadditionsverbindungen, ein Verfahren zu ihrer Herstellung und ihrer Verwendung als Ausgangskomponente bei der Herstellung von Polyurethankunststoffen, insbesondere als Vernetzer für Hitze-vernetzbare Pulverlacke.

Bei Raumtemperatur feste Kombinationen aus organischen Polyhydroxylverbindungen und blockierten Polyisocyanaten stellen wertvolle Bindemittel für Hitze-vernetzbare Pulverlacke dar (vgl. z. B. DE-OS 21 05 777, DE-OS 25 42 191, DE-OS 31 43 060, DE-OS 27 35 497, DE-OS 28 42 641, EP-A 286 799, EP-A 218 040, EP-A 460 963, DE-OS 28 01 126, EP-A 403 779, WO 91/15532, US-PS 3 857 818, US-PS 4 375 539, EP-A 409 745, DE-OS 28 122 52, DE-OS 29 46 085 oder DE-OS 34 34 881).

Den Systemen dieser Vorveröffentlichungen gemeinsam ist der Nachteil, daß bei der thermischen Vernetzung die als Blockierungsmittel eingesetzten Verbindungen abgespalten werden und in die Umwelt entweichen. Bei ihrer Verarbeitung müssen daher aus Gründen der Ökologie und Arbeitshygiene besondere Vorkehrungen zur Reinigung der Abluft und/oder Wiedergewinnung des Blockierungsmittels getroffen werden.

Ein Versuch, diesen prinzipiellen Nachteil zu beseitigen, ist in der Verwendung von blockierungsmittelfreien, Uretdiongruppen-haltigen PUR-Pulverlackhärtem zu sehen, bei denen die Vernetzung unter thermischer Rückspaltung der Uretdiongruppen erfolgt.

Die Herstellung solcher Pulverlackvernetzer ist prinzipiell bekannt. So beschreibt die DE-OS 2420475 Umsetzungsprodukte Uretdiongruppen-haltiger Polyisocyanate bzw. Polyisocyanatgemische mit difunktionellen und gegebenenfalls monofunktionellen, gegenüber Isocyanaten reaktive Gruppen tragenden aliphatischen oder cycloaliphatischen Verbindungen als blockierungsmittelfreie Vernetzer für PUR-Einbrennsysteme. Insbesondere bei der Umsetzung Uretdiongruppen-haltiger Polyisocyanate auf Basis aromatischer Diisocyanate, wie Toluylendiisocyanat (TDI), mit einfachen, gegebenenfalls Ethersauerstoff aufweisenden Diolen entstehen feste, als Pulverlackhärter geeignete Produkte, die Schmelzpunkte im Bereich von 140 bis 260°C aufweisen.

Da die Rückspaltung des Uretdionringes in Gegenwart von hydroxyfunktionellen Reaktionspartnern schon ab Temperaturen von etwa 110°C einsetzt, lassen sich die beschriebenen, als Pulverlackvernetzer geeigneten Polyadditionsprodukte nicht in Schmelze, sondern nur in gegenüber Isocyanaten inerten Lösemitteln gelöst herstellen, was anschließend einen zusätzlichen Verfahrensschritt zur Abtrennung des Hilfslösemittels erforderlich macht.

Uretdiongruppen-haltige Pulverlackvernetzer, aufgebaut aus linearem, difunktionellem IPDI-Uretdion, einfachen, gegebenenfalls Ethersauerstoff aufweisenden Diolen und gegebenenfalls endständig Monoaminen oder Monoalkoholen, sind Gegenstand der EP-A-00 45 994, EP-A-00 45 996 und EP-A-00 45 998. Auch bei der Herstellung dieser Polyadditionsprodukte darf eine Reaktionstemperatur von 110°C nicht überschritten werden, da sonst Rückspaltung der Uretdiongruppen eintritt. Insbesondere bei einem hohen Verlängerungsgrad, wie er für eine hohe Uretdionfunktionalität des Vernetzers und somit eine hohe Vernetzungsdichte erforderlich ist, d. h. wenn mindestens 70 % der NCO-Gruppen der difunktionellen IPDI-Uretdione unter Kettenverlängerung mit Diolen umgesetzt werden, entstehen jedoch Produkte, die Schmelzpunkte im Bereich dieser Rückspalttemperatur oder sogar darüber aufweisen. Solche Polyadditionsverbindungen lassen sich daher ebenfalls nur in Lösung mit einem nachfolgenden Ausdampfschritt sicher und reproduzierbar herstellen.

Jedoch auch die in den genannten Vorveröffentlichungen beschriebenen IPDI-Uretdionpulverlackhärter mit deutlich unterhalb der Rückspalttemperatur liegenden Schmelzpunkten im Bereich von etwa 80°C besitzen bei der maximal erlaubten Reaktionstemperatur von 110°C noch so hohe Schmelzviskositäten, daß auch ihre Produzierbarkeit in der Schmelze aufgrund der ungenügenden Rührbarkeit im technischen Maßstab an Grenzen stößt,

Pulverlacke, die unter Verwendung der bekannten Uretdiongruppen-haltigen Pulverlackhärter des Standes der Technik hergestellt wurden, zeigen im übrigen wegen der hohen Schmelzviskosität solcher Verbindungen zumeist nur mäßige optische Eigenschaften, insbesondere einen ungenügenden Verlauf.

Es war daher die der vorliegenden Erfindung zugrunde liegende Aufgabe, Uretdiongruppen-haltige PUR-Pulverlackvernetzer zur Verfügung zu stellen, die nicht mit den geschilderten Nachteilen der Polyadditionsprodukte des Standes der Technik behaftet sind.

Diese Aufgabe konnte mit der Bereitstellung der nachfolgend näher beschriebenen erfindungsgemäßen Polyadditionsverbindungen bzw. des Verfahrens zu ihrer Herstellung gelöst werden. Die nachfolgend näher beschriebenen erfindungsgemäßen Polyadditionsverbindungen basieren auf der überraschenden Beobachtung, daß Uretdiongruppen aufweisende Polyadditionsverbindungen, in denen zusätzlich Ester- und/oder Carbonatgruppen eingebaut sind, bereits bei Temperaturen nur wenig oberhalb ihres Schmelzpunktes so niedrige Schmelzviskositäten aufweisen, daß ihre problemlose Herstellung in der Schmelze ermöglicht wird und sich mit ihrer Hilfe Pulverbeschichtungen erhalten lassen, die sich durch hervorragenden Verlauf und sehr hohen Glanz auszeichnen. Besonders überraschend ist dabei die Tatsache, daß die nachstehend näher beschriebenen, erfindungsgemäßen Uretdiongruppen aufweisende Polyadditionsverbindungen, in denen zusätzlich Ester- und/oder Carbonatgruppen eingebaut sind, bei ihrer Verwendung als Härterkomponente in PUR-Pulverlacken bereits bei deutlich niedrigeren Einbrenntemperaturen zu vollvernetzten Lackfilmen aushärten, als die entsprechenden Ester- und Carbonatgruppen-freien Polyadditionsverbindungen des Standes der Technik.

Gegenstand der vorliegenden Erfindung sind Polyadditionsverbindungen, die unterhalb von 40°C in fester und oberhalb von 125°C in flüssiger Form vorliegen und
a) einen Gehalt an freien Isocyanatgruppen (berechnet als NCO; Molekulargewicht = 42) von 0 bis 2 Gew.-%,
b) einen Gehalt an Uretdiongruppen (berechnet als C₂N₂O₂; Molekulargewicht = 84) von 3 bis 16 Gew.-% und
c) einen Gehalt an Urethangruppen (berechnet als -NH-CO-O-; Molekulargewicht = 59) von 10 bis 22 Gew.-% aufweisen,
dadurch gekennzeichnet, daß die Polyadditionsverbindungen zusätzlich
d) einen Gehalt an Carbonsäureestergruppen (berechnet als -CO-O-; Molekulargewicht = 44) von 0 bis 20 Gew.-%
und/oder
e) einen Gehalt an Carbonatgruppen (berechnet als -O-CO-O-; Molekulargewicht = 60) von 0 bis 25 Gew.-% aufweisen,
mit der Maßgabe, daß der Gesamtgehalt an Carbonsäureester- und Carbonatgruppen mindestens 1 Gew.-% betragt.

Gegenstand der Erfindung ist auch ein Verfahren zur Herstellung dieser Polyadditionsverbindungen, das dadurch gekennzeichnet ist, daß man
A) Uretdiongruppen aufweisende Polyisocyanate einer mittleren Isocyanatfunktionalität von mindestens 2,0, gegebenenfalls unter Mitverwendung von
B) weiteren Diisocyanaten in einer Menge von bis zu 70 Gew.-%, bezogen auf das Gesamtgewicht der Komponenten A) und B), mit
C) Estergruppen und/oder Carbonatgruppen aufweisenden Diolen eines mittleren Molekulargewichtes von 134 bis 1200, gegebenenfalls unter gleichzeitiger Mitverwendung von
D) Estergruppen- und Carbonatgruppen-freien Diolen eines Molekulargewichtes von 62 bis 300 in einer Menge von bis zu 80 Gew.-%, bezogen auf das Gesamtgewicht der Komponenten C) und D), und/oder gegebenenfalls
E) weiteren gegenüber Isocyanatgruppen reaktiven, monofunktionellen Verbindungen in einer Menge von bis zu 40 Gew.-%, bezogen auf das Gesamtgewicht der Komponenten C), D) und E),
unter Einhaltung eines Äquivalentverhältnisses von Isocyanatgruppen zu gegenüber Isocyanaten reaktiven Gruppen von 1,2:1 bis 0,6:1 miteinander umsetzt, wobei im übrigen Art und Mengenverhältnisse der genannten Ausgangsstoffe so gewählt werden, daß die resultierenden Verfahrensprodukte den oben unter a) bis e) genannten Bedingungen entsprechen.

Gegenstand der Erfindung ist auch die Verwendung dieser Polyadditionsverbindungen als Ausgangskomponente bei der Herstellung von Polyurethankunststoffen, insbesondere als Vernetzerkomponente in Hitze-vernetzbaren Zweikomponenten-Polyurethan-Pulverlacken bei der Beschichtung beliebiger hitzeresistenter Substrate nach den Methoden der Pulverlacktechnologie.

Ausgangsverbindungen A) für das erfindungsgemäße Verfahren sind beliebige Uretdiongruppen aufweisende Polyisocyanate einer mittleren Isocyanatfunktionalität von mindestens 2,0, wie sie sich in an sich bekannter Weise durch katalytische Dimerisierung eines Teils der Isocyanatgruppen einfacher Diisocyanate und vorzugsweise sich anschließende Abtrennung des nicht umgesetzten Diisocyanatüberschusses, beispielsweise durch Dünnschichtdestillation, erhalten lassen. Zur Herstellung der Ausgangsverbindungen A) sind beliebige Diisocyanate mit aliphatisch, cycloaliphatisch, araliphatisch und/oder aromatisch gebundenen Isocyanatgruppen, beispielsweise solche des Molekulargewichtsbereiches 140 bis 400, geeignet, wie z. B. 1,4-Diisocyanatobutan, 1,6-Diisocyanatohexan, 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1,3-Diisocyanato-2(4)-methylcyclohexan, 1-Isocyanato-3,3,5-trimethyl-5-isocyanatomethyl-cyclohexan (Isophorondiisocyanat), 1-Isocyanato-1-methyl-4(3)-isocyanatomethylcyclohexan, 4,4'-Diisocyanatodicyclohexylmethan, 1.3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate.

Als Katalysatoren zur Herstellung der Ausgangsverbindungen A) aus den genannten Diisocyanaten sind grundsätzlich alle bekannten, die Dimerisierung von Isocyanatgruppen katalysierenden Verbindungen geeignet, wie z. B. tertiäre organische Phosphine der in der US-PS 4614785, Kolonne 4, Zeilen 11 bis 47, oder den DE-OS'en 1934763 und 3900053 genannten Art, Tris-(dialkylamino)-phosphine der in den DE-OS'en 3030513, 3227779 und 3437635 genannten Art, substituierte Pyridine der in den DE-OS'en 1081895 und 3739549 genannten Art oder substituierte Imidazole oder Benzimidazole der in der EP 417603 genannten Art.

Bevorzugte Ausgangsverbindungen A) für das erfindungsgemäße Verfahren sind Uretdiongruppen aufweisende Polyisocyanate auf Basis von Diisocyanaten mit aliphatisch und/oder cycloaliphatisch gebundenen Isocyanatgruppen der oben beispielhaft genannten Art oder Gemische solcher Polyisocyanate.

Besonders bevorzugt ist die Verwendung von Uretdiongruppen aufweisenden Polyisocyanaten auf Basis von 1,6-Diisocyanatohexan und/oder 1-Isocyanato-3,3,5-trimethyl-5-isocyanato-methyl-cyclohexan.

Bei der an sich bekannten Herstellung der Uretdiongruppen aufweisenden Polyisocyanate durch katalytische Dimerisierung der beispielhaft genannten Diisocyanate erfolgte oftmals in untergeordnetem Umfang gleichzeitig mit der Dimerisierungsreaktion eine Trimerisierungsreaktion unter Bildung von höher als difunktionellen, Isocyanuratgruppen aufweisenden Polyisocyanaten, was zur Folge hat, daß die mittlere NCO-Funktionalität der Komponente A), bezogen auf die freien NCO-Gruppen, vorzugsweise bei 2,0 bis 2,5 liegt.

Gegebenenfalls können beim erfindungsgemäßen Verfahren weitere Diisocyanate B) mitverwendet werden. Hierbei handelt es sich beispielsweise um die oben beschriebenen, zur Herstellung der Ausgangsverbindungen A) geeigneten Diisocyanate mit aliphatisch, cycloaliphatisch, araliphatisch und/oder aromatisch gebundenen Isocyanatgruppen. Diese Diisocyanate B) werden, falls überhaupt, in Mengen von bis zu 70 Gew.-%, vorzugsweise bis zu 50 Gew.-%, bezogen auf das Gesamtgewicht der Komponenten A) und B) mitverwendet. Für das erfindungsgemäße Verfahren geeignete Gemische an Ausgangskomponenten A) und B) stellen auch Lösungen von Uretdiongruppen aufweisenden Polyisocyanaten in monomeren Diisocyanaten dar, wie man sie bei der oben beschriebenen Herstellung der Ausgangsverbindungen A) erhält, wenn man nach anteiliger katalytischer Dimerisierung auf die Abtrennung der überschüssigen, nicht umgesetzten Diisocyanate verzichtet. In diesem Fall kann der Anteil der Diisocyanate B) an der Gesamtmenge der Ausgangskomponenten A) und B) auch bis zu 70 Gew.-% betragen. Bevorzugte Diisocyanate B), wie sie gegebenenfalls beim erfindungsgemäßen Verfahren mitverwendet werden können, stellen Diisocyanate mit cycloaliphatisch gebundenen Isocyanatgruppen dar. Besonders bevorzugt ist die Verwendung von 1-Isocyanato-3,3,5-trimethyl-5-isocyanatomethyl-cyclohexan und/oder 4,4'-Diisocyanatodicyclohexylmethan.

Als Ausgangsverbindungen C) kommen beim erfindungsgemäßen Verfahren Estergruppen und/oder Carbonatgruppen aufweisende Diole eines mittleren, aus Funktionalität und Hydroxylzahl berechenbaren Molekulargewichts von 134 bis 1200, vorzugsweise 176 bis 800, zum Einsatz.

Hierbei handelt es sich beispielsweise um die an sich bekannten, Estergruppen aufweisenden Diole oder Gemische solcher Diole, wie sie sich z. B. durch Umsetzung von zweiwertigen Alkoholen mit unterschüssigen Mengen an Dicarbonsäure, entsprechenden Dicarbonsäureanhydriden, entsprechenden Dicarbonsäureestern von niederen Alkoholen oder Lactonen herstellen lassen.

Zur Herstellung dieser Esterdiole geeignete zweiwertige Alkohole sind insbesondere solche des Molekulargewichtsbereichs 62 bis 300 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol oder 4,4'-(1-Methylethyliden)-biscyclohexanol.

Die zur Herstellung der Esterdiole verwendeten Säuren oder Säurederivate können aliphatischer, cycloaliphatischer, aromatischer und/oder heteroaromatischer Natur sein und gegebenenfalls, z. B. durch Halogenatome, substituiert und/oder ungesättigt sein.

Beispiele geeigneter Säuren sind beispielsweise zweiwertige Carbonsäuren des Molekulargewichtsbereichs 118 bis 300 oder deren Derivate, wie beispielsweise Bernsteinsäure, Adipinsäure, Sebacinsäure, Phthalsäure, Isophthalsäure, Phthalsäureanhydrid, Tetrahydrophthalsäure, Maleinsäure, Maleinsäureanhydrid, dimere Fettsäuren, Terephthalsäuredimethylester und Terephthalsäure-bis-glykolester.

Zur Herstellung der Esterdiole können auch beliebige Gemische der beispielhaft genannten Ausgangsverbindungen eingesetzt werden.

Bevorzugte Esterdiole sind jedoch solche, wie sie sich in an sich bekannter Weise aus Lactonen und einfachen zweiwertigen Alkoholen als Startermolekülen unter Ringöffnung herstellen lassen.

Geeignete Lactone zur Herstellung dieser Esterdiole sind beispielsweise β-Propiolacton, γ- Bu-tyrolacton, γ- und δ-Valerolacton, ε-Caprolacton, 3,5,5- und 3,3,5-Trimethylcaprolacton oder beliebige Gemische solcher Lactone. Als Startermoleküle dienen beispielsweise die oben beispielhaft genannten zweiwertigen Alkohole des Molekulargewichtsbereichs 62 bis 300 oder beliebige Gemische dieser Alkohole. Besonders bevorzugte Esterdiole sind solche auf Basis von ε-Caprolacton.

Ausgangsverbindungen C) für das erfindungsgemäße Verfahren stellen auch Carbonatgruppen aufweisende Diole dar. Hierbei handelt es sich um Carbonatdiole der an sich bekannten Art, wie sie beispielsweise durch Umsetzung der oben beispielhaft genannten zweiwertigen Alkohole des Molekulargewichtsbereichs 62 bis 300 mit Diarylcarbonaten, wie z. B. Diphenylcarbonat, Phosgen oder bevorzugt cyclischen Carbonaten, wie z. B. Trimethylencarbonat oder 2,2-Dimethyl-trimethylencarbonat (Neopentylglykolcarbonat, NPC) oder Gemischen solcher cyclischen Carbonate, erhalten werden können. Besonders bevorzugte Carbonatdiole sind solche, die aus den genannten zweiwertigen Alkoholen als Startermolekülen und NPC unter Ringöffnung hergestellt werden können.

Als Ausgangsverbindungen C) für das erfindungsgemäße Verfahren eignen sich weiterhin auch Estergruppen- und Carbonatgruppen aufweisende Diole. Solche Estercarbonatdiole sind beispielsweise gemäß der Lehre der DE-AS 1770245 durch Umsetzung der oben beispielhaft genannten zweiwertigen Alkohole des Molekulargewichtsbereiches 62 bis 300 mit Lactonen der oben beispielhaft genannten Art, insbesondere ε-Caprolacton und anschließende Reaktion der dabei entstehenden Esterdiole mit Diphenylcarbonat herstellbar. Bevorzugt kommen jedoch Estercarbonatdiole zum Einsatz, wie sie sich durch Umsetzung der genannten zweiwertigen Alkohole mit Mischungen von Lactonen und cyclischen Carbonaten unter Ringöffnung erhalten lassen.

Die Herstellung der vorstehend beschriebenen, bevorzugt beim erfindungsgemäßen Verfahren eingesetzten Esterdiole, Carbonatdiole und Estercarbonatdiole durch ringöffnende Polymerisation, erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Beliebige Gcmische der beispielhaft genannten Esterdiole, Carbonatdiole und Estercarbonatdiolen können gegebenenfalls beim erfindungsgemäßen Verfahren als Ausgangskomponente C) zum Einsatz gelangen.

Gegebenenfalls können beim erfindungsgemäßen Verfahren auch Estergruppen- und Carbonatgruppen-freie Diole D) des Molekulargewichtsbereiches 62 bis 300 mitverwendet werden. Hierbei handelt es sich beispielsweise um die oben bei der Herstellung der Ausgangsverbindungen C) beschriebenen einfachen zweiwertigen Alkohole oder beliebige Gemische dieser Alkohole. Estergruppen- und Carbonatgruppen-freie Diole D) werden, falls überhaupt, in Mengen von bis zu 80 Gew.-%, vorzugsweise bis zu 60 Gew.-%, bezogen auf die Gesamtmenge der Ausgangskompontenten C) und D) mitverwendet. Für das erfindungsgemäße Verfahren geeignete Gemische aus Ausgangskomponenten C) und D) resultieren beispielsweise auch dann, wenn die als Ausgangsmaterial eingesetzten zweiwertigen Alkohole der beispielhaft genannten Art mit unterschüssigen Mengen an Säuren bzw. Säurederivaten, Diarylcarbonaten oder cyclischen Carbonaten der beispielhaft genannten Art oder Phosgen nur teilweise in Estergruppen- und/oder Carbonatgruppenhaltige Diole überführt werden.

Beim erfindungsgemäßen Verfahren können gegebenenfalls auch noch weitere gegenüber Isocyanatgruppen reaktive monofunktionelle Verbindungen E) mitverwendet werden. Hierbei handelt es sich insbesondere um einfache aliphatische bzw. cycloaliphatische Monoamine oder Monoalkohole des Molekulargewichtsbereiches 31 bis 300, beispielsweise primäre Monoamine, wie Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin sowie Dicyclohexylamin oder Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren cyclohexanole sowie Hydroxmethylcyclohexan.

Diese monofunktionellen Verbindungen E) kommen, falls überhaupt, in Mengen von bis zu 40 Gew.-%, vorzugsweise 25 Gew.-%, bezogen auf die Gesamtmenge an gegenüber Isocyanaten reaktiven Ausgangsverbindungen C), D) und E) zum Einsatz.

Bevorzugte Ausgangsverbindungen E) für das erfindungsgemäße Verfahren sind die einfachen aliphatischen oder cycloaliphatischen Monoalkohole der genannten Art.

Zur Durchführung des erfindungsgemäßen Verfahrens werden die Uretdiongruppen aufweisenden Polyisocyanate A), gegebenenfalls unter Mitverwendung weiterer Diisocyanate B), mit Estergruppen und/oder Carbonatgruppen aufweisenden Diolen C), gegebenenfalls unter Mitverwendung Estergruppen- und Carbonatgruppen-freier Diole D) und gegebenenfalls weiteren gegenüber Isocyanaten reaktiven, monofünktionellen Verbindungen E) in dem genannten Äquivalent-Verhältnis von Isocyanatgruppen zu gegenüber Isocyanaten reaktiven Gruppen von 1,2:1 bis 0,6:1, vorzugsweise 1,1:1 bis 0,8:1 bei einer Reaktionstemperatur von 40 bis 110°C, besonders bevorzugt 60 bis 105°C umgesetzt.

In Abhängigkeit vom gewählten Äquivalentverhältnis wird die Reaktion bei Verwendung äquivalenter oder überschüssiger Mengen an Isocyanatgruppen bis zum Erreichen eines NCO-Restgehaltes von max. 2,0 Gew.-%, bevorzugt von unterhalb 1,2 Gew.-%, besonders bevorzugt von unterhalb 0,9 Gew.-%, bei Verwendung unterschüssiger Mengen an Isocyanatgruppen bis zum Erreichen eines NCO-Restgehaltes von unterhalb 0,5 %, bevorzugt von unterhalb 0,2 %, besonders bevorzugt jedoch bis zur vollständigen Umsetzung aller Isocyanatgruppen geführt. Im übrigen werden Art und Mengenverhältnisse der genannten Ausgangskomponenten im Rahmen der gemachten Angaben so gewählt, daß die resultierenden Polyadditionsverbindungen den oben unter a) bis e) gemachten Angaben entsprechen, wobei (a) der Gehalt der Polyadditionsverbindungen an freien Isocyanatgruppen vorzugsweise unterhalb 1,2 Gew.-%, besonders bevorzugt unterhalb 0,9 Gew.-%, (b) der Gehalt an Uretdiongruppen vorzugsweise bei 5 bis 15 Gew.-%, besonders bevorzugt bei 7 bis 14 Gew.-%, (c) der Gehalt an Urethangruppen vorzugsweise bei 11 bis 20 Gew.-%, besonders bevorzugt bei 12 bis 17 Gew.-%, (d) der Gehalt an Carbonsäureestergruppen vorzugsweise bei 0 bis 18 Gew.-%, besonders bevorzugt bei 0 bis 16 Gew.-%, (e) der Gehalt an Carbonatgruppen vorzugsweise bei 0 bis 20 Gew.-%, besonders bevorzugt bei 0 bis 15 Gew.-% liegt, wobei der Gesamtgehalt an Carbonsäureestern und Carbonatgruppen vorzugsweise mindestens 2 Gew.-%, besonders bevorzugt mindestens 3 Gew.-% beträgt und wobei die Polyadditionsverbindungen unterhalb 40°C fest und oberhalb 125°C flüssig sind, insbesondere einen nach der Differential-Thermoanalyse (DTA) bestimmten Schmelzpunkt bzw. Schmelzbereich aufweisen, der innerhalb eines Temperaturbereiches von 40 bis 110°C, besonders bevorzugt innerhalb des Temperaturbereiches von 50 bis 100°C liegt

Die erfindungsgemäßen Uretdiongruppen aufweisenden Polyadditionsprodukte zeichnen sich bereits bei Temperaturen nur wenig oberhalb ihres Schmelzpunktes bzw. Schmelzbereiches durch sehr niedrige Schmelzviskositäten aus. Sie lassen sich daher nach dem erfindungsgemäßen Verfahren sehr einfach in der Schmelze bei Temperaturen unterhalb der Rückspalttemperatur von Uretdiongruppen herstellen.

Selbstverständlich kann die Umsetzung jedoch gegebenenfalls in einem geeigneten, gegenüber Isocyanatgruppen inerten Lösemittel durchgeführt werden. Geeignete Lösemittel für diese weniger bevorzugte Vorgehensweise sind beispielsweise die an sich bekannten üblichen Lacklösemittel wie z. B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam, oder Gemische solcher Lösemittel.

Diese gegebenenfalls mitverwendeten Lösemittel müssen nach erfolgter Umsetzung mit Hilfe geeigneter Methoden, beispielsweise durch einfaches Absaugen, Sprühtrocknung oder Schmelzextrusion in einer Ausdampfschnecke, vom erfindungsgemäßen Verfahrensprodukt abgetrennt werden.

Zur Beschleunigung der Reaktion können beim erfindungsgemäßen Verfahren die üblichen aus der Polyurethanchemie bekannten Katalysatoren eingesetzt werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-ethylcaproat, Dibutylzinn(IV)-dilaurat und Molybdänglykolat.

Diese Katalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangsverbindungen zum Einsatz.

Die erfindungsgemäßen Polyadditionsverbindungen stellen wertvolle Ausgangsmaterialien zur Herstellung von Polyurethankunststoffen nach dem Isocyanat-Polyadditionsverfahren dar. Sie finden insbesondere Verwendung als Vernetzerkomponente in hitzehärtbaren blockierungsmittelfreien PUR-Pulverlacken.

Geeignete Reaktionspartner für die erfindungsgemäßen Polyadditionsverbindungen sind dabei grundsätzlich sämtliche aus der Pulverlack-Technologie bekannten Bindemittel mit gegenüber Isocyanaten reaktionsfähigen Gruppen, wie z. B. Hydroxyl-, Carboxyl-, Amino-, Thiol-, Urethan- oder Harnstoffgruppen. Bevorzugt kommen jedoch hydroxyfunktionelle Pulverlackbindemittel zum Einsatz, die unterhalb 40°C fest und oberhalb 130°C flüssig sind. Die Erweichungstemperaturen dieser hydroxyfunktionellen Harze - bestimmt nach der Differential-Thermoanalyse (DTA) - liegen vorzugsweise innerhalb des Temperaturbereiches von 30 bis 120°C, besonders bevorzugt innerhalb des Temperaturbereiches von 35 bis 110°C.

Ihre Hydroxylzahlen liegen im allgemeinen zwischen 25 und 200, vorzugsweise zwischen 30 und 130 und ihr mittleres (aus der Funktionalität und dem Hydroxylgehalt errechenbares) Molekulargewicht im allgemeinen zwischen 400 und 10 000, vorzugsweise zwischen 1 000 und 5 000.

Derartige Pulverlackbindemittel sind beispielsweise hydroxylgruppenhaltige Polyester, Polyacrylate oder Polyurethane, wie sie in den obengenannten Veröffentlichungen des Standes der Technik, z. B. der EP-A-00 45 998, oder der EP-A-02 54 152 beschrieben sind, aber auch beliebige Mischungen solcher Harze.

Zur Herstellung eines gebrauchsfertigen Pulverlacks werden die erfindungsgemäßen Polyadditionsverbindungen mit geeigneten hydroxyfunktionellen Pulverlackbindemitteln gemischt, gegebenenfalls mit weiteren Hilfs- und Zusatzmitteln, wie z. B. Katalysatoren, Pigmenten, Füllstoffen oder Verlaufsmitteln versetzt, und beispielsweise auf Extrudern oder Knetern oberhalb des Schmelzbereichs der Einzelkomponenten, beispielsweise 70 bis 130°C, vorzugsweise 70 bis 110°C, zu einem homogenen Material vereinigt.

Der nach Abkühlen der Schmelze resultierende Feststoff wird anschließend gemahlen und durch Sieben von den Kornanteilen oberhalb der gewünschten Korngröße, beispielsweise oberhalb 0,1 mm, befreit.

Die erfindungsgemäßen Polyadditionsverbindungen und die hydroxyfunktionellen Bindemittel kommen hierbei in solchen Mengenverhältnissen zum Einsatz, daß auf jede Hydroxylgruppe 0,6 bis 1,4, vorzugsweise 0,8 bis 1,2 an Isocyanatgruppen entfallen, wobei unter Isocyanatgruppen bei den erfindungsgemäßen Polyadditionsverbindungen die Summe aus in dimerer Form als Uretdiongruppen vorliegenden Isocyanatgruppen und freien Isocyanatgruppen verstanden wird.

Bei den gegebenenfalls zur Beschleunigung der Aushärtung mitzuverwendenden Katalysatoren handelt es sich um die üblichen, aus der Polyurethanchemie bekannten Verbindungen, wie sie schon oben beim erfindungsgemäßen Verfahren zur Reaktionsbeschleunigung beschrieben wurden. Diese Katalysatoren können gegebenenfalls in Mengen von 0,01 bis 5,0 Gew.-% vorzugsweise 0,05 bis 1,0 Gew.-%, bezogen auf die Gesamtmenge an organischem Bindemittel, d.h. erfindungsgemäßen Polyadditionsverbindungen in Kombination mit den hydroxyfunktionellen Pulverlackbindemitteln aber exklusive den gegebenenfalls verwendeten weiteren Hilfs- und Zusatzmitteln, zugesetzt werden.

Der so hergestellte sprühfertige Pulverlack kann nach üblichen Pulverauftragsverfahren, wie z. B. elektrostatischem Pulverversprühen oder Wirbelsintern, auf die zu überziehenden Substrate aufgebracht werden. Die Härtung der Überzüge erfolgt durch Erhitzen auf Temperaturen von 110 bis 220°C, vorzugsweise 130 bis 200°C beispielsweise während eines Zeitraums von ca. 10 bis 30 Minuten. Man erhält harte und elastische Beschichtungen, die sich durch gute Lösemittel- und Chemikalienbeständigkeit auszeichnen.

Aufgrund der niedrigen Schmelzviskosität der erfindungsgemäßen Uretdiongruppenaufweisenden Polyadditionsverbindungen weisen die mit ihrer Hilfe hergestellten Pulverlacke einen hervorragenden Verlauf und sehr hohen Glanz auf. Dabei werden zur Erzielung vollvernetzter Lackfilme deutlich niedrigere Einbrenntemperaturen benötigt, als bei Verwendung entsprechender Estergruppen- und Carbonatgruppenfreier Polyadditionsverbindungen des Standes der Technik.

Erfindungsgemäß können beliebige hitzeresistente Substrate, wie beispielsweise solche aus Glas oder Metallen, beschichtet werden.

Die nachfolgenden Beispiele dienen zur weiteren Erläuterung der Erfindung. Alle Prozentangaben, mit Ausnahme der Glanzwerte, beziehen sich auf Gewichtsprozente.

### Beispiele

### Herstellung der Ausgangsverbindungen C

### Estergruppen aufweisendes Diol C 1

901 g 1,4-Butandiol und 2282 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses, flüssiges Produkt mit folgenden Kenndaten:

| | |
|---|---|
| η (23 °C) | 240 mPas |
| OH-Zahl | 342 mg KOH/g |
| freies Caprolacton | 0,3 % |
| mittleres Molekulargewicht (aus OH-Zahl ber.) | 327 |
| Estergruppengehalt (ber.) | 27,6 % |

### Estergruppen aufweisendes Diol C 2

901 g 1,4-Butandiol und 1712 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses, flüssiges Produkt mit folgenden Kenndaten:

| | |
|---|---|
| η (23°C) | 180 mPas |
| OH-Zahl | 416 mg KOH/g |
| freies Caprolacton | 0,2 % |
| mittleres Molekulargewicht (aus OH-Zahl ber.) | 269 |
| Estergruppengehalt (ber.) | 25,3 % |

### Carbonatgruppen aufweisendes Diol C 3

901 g 1,4-Butandiol und 2600 g Neopentylglykolcarbonat (NPC) werden bei Raumtemperatur unter trockenem Stickstoff vorgelegt, mit 0,4 g orthoPhosphorsäure versetzt und anschließend für 8 h auf 160°C erhitzt. Nach Abkühlen auf Raumtemperatur erhält man ein praktisch farbloses, flüssiges Produkt mit folgenden Kenndaten:

| | |
|---|---|
| η (23°C) | 6500 mPas |
| OH-Zahl | 306 mg KOH/g |
| freies NPC | 0,8 % |
| mittleres Molekulargewicht (aus OH-Zahl ber.) | 366 |
| Carbonatgruppengehalt (ber.) | 34,3 % |

### Carbonatgruppen aufweisendes Diol C 4

901 g 1,4-Butandiol und 1300 g NPC werden bei Raumtemperatur unter trockenem Stickstoff vermischt, mit 0,2 g ortho-Phosphorsäure versetzt und anschließend für 8 h auf 160°C erhitzt. Nach Abkühlen auf Raumtemperatur erhält man ein praktisch farbloses, flüssiges Produkt mit folgenden Kenndaten:

| | |
|---|---|
| η (23°C) | 1500 mPas |
| OH-Zahl | 519 mg KOH/g |
| freies NPC | 0,5 % |
| mittleres Molekulargewicht (aus OH-Zahl ber.) | 216 |
| Carbonatgruppengehalt (ber.) | 27,3 % |

### Estergruppen aufweisendes Diol C 5

1 182 g 1,6-Hexandiol und 1 141 g ε-Caprolacton werden bei Raumtemperatur unter trockenem Stickstoff vermischt, mit 0,2 g Zinn(II)-octoat versetzt und anschließend für 5 h auf 160°C erhitzt. Nach Abkühlen auf Raumtemperatur erhält man ein farbloses, flüssiges Produkt mit folgenden Kenndaten:

| | |
|---|---|
| η (23°C) | 210 mPas |
| OH-Zahl | 474 mg KOH/g |
| freies Caprolacton | 0,2 % |
| mittleres Molekulargewicht (aus OH-Zahl ber.) | 236 |
| Estergruppengehalt (ber.) | 18,9 % |

### Beispiel 1

1 000 g (4,3 val) eines uretdiongruppenhaltigen Polyisocyanates auf Basis von 1-Isocyanato-3,3,5-trmethyl-5-isocyanatomethylcyclohexan (IPDI) mit einem Gehalt an freien Isocyanatgruppen von 17,9 %, einer mittleren NCO-Funktionalität von 2,0 und einem Gehalt an Uretdiongruppen (bestimmt durch Heißtitration) von 19,1 % werden unter trockenem Stickstoff auf 80°C erwärmt. Anschließend gibt man innerhalb von 30 min eine Mischung von 556 g (3,4 val) des Estergruppen aufweisenden Diols C 1 und 117 g (0,9 val) 2-Ethyl-1-hexanol zu und rührt bei einer Reaktionstemperatur von max. 100°C bis der NCO-Gehalt des Reaktionsgemisches nach 7 bis 8 h auf einen Wert von 0,8 % abgesunken ist.

Die Schmelze wird zum Erkalten auf ein Blech gegossen, und man erhält eine erfindungsgemäße Polyadditionsverbindung als praktisch farbloses Festharz mit folgenden Kenndaten:

| | |
|---|---|
| NCO-Gehalt | 0,8 % |
| Uretdiongruppen-Gehalt (ber.) | 11,9 % |
| NCO-Gehalt gesamt | 12,7 % |
| Schmelzpunkt | 65 - 68 °C |
| Estergruppen-Gehalt (ber.) | 9,2 % |
| Urethangruppen-Gehalt (ber.) | 15,2 % |

### Beispiel 2 (Vergleich)

1 000 g (4,3 val) des uretdiongruppenhaltigen Polyisocyanates aus Beispiel 1 werden unter trockenem Stickstoff auf 80°C erwärmt. Anschließend gibt man innerhalb von 30 min eine Mischung von 153 g (3,4 val) 1,4-Butandiol und 117 g (0,9 val) 2-Ethyl-1-hexanol zu. Wegen der rasch ansteigenden Viskosität des Reaktionsgemisches mußte, um die Rührfähigkeit des Gemischs zu gewährleisten, die Heizbadtemperatur auf 110°C erhöht werden. Nach ca. 40 min beträgt der NCO-Gehalt der Reaktionsmischung 2,8 %. Nach 60 min ist die Temperatur des Reaktionsgemisches aufgrund der weiter angestiegenen Viskosität unter der Einwirkung der beim Rühren auftretenden Scherkräfte trotz einer gleichbleibenden Außentemperatur von 110°C auf 127°C angestiegen. Der NCO-Gehalt hat sich auf 4,1 % erhöht und sinkt auch bei längerer Reaktionsdauer nicht wieder ab.

Der Vergleich zeigt, daß bei der Umsetzung des uretdiongruppenhaltigen Polyisocyanates aus Beispiel 1 mit Estergruppen- und Carbonatgruppen-freien Diolen in der Schmelze entsprechend dem in Beispiel 1 beschriebenen Verfahren in starkem Maße Uretdionspaltung unter Freisetzung von Isocyanatgruppen eintritt.

### Beispiel 3 (Vergleich)

1 000 g (4,3 val) des uretdiongruppenhaltigen Polyisocyanates aus Beispiel 1 werden in 1 270 g wasserfreiem Toluol bei 80°C unter trockenem Stickstoff vorgelegt. Man gibt innerhalb von 30 min eine Mischung von 153 g (3,4 val) 1,4-Butandiol und 117 g (0,9 val) 2-Ethyl-1-hexanol zu und rührt bei einer Reaktionstemperatur von 100°C bis der NCO-Gehalt auf einen Wert von 0,2 % abgesunken ist. Die erhaltene gelbliche Lösung wird anschließend durch Sprühtrocknung in einem handelsüblichen Laborsprühtrockner Minispray Dryer 190 (Fa. Büchi) vollständig vom Lösungsmittel befreit. Man erhält ein blaßgelbes Produkt mit folgenden Kenndaten:

| | |
|---|---|
| NCO-Gehalt | 0,3 % |
| Uretdiongruppen-Gehalt (ber.) | 15,0 % |
| NCO-Gehalt gesamt | 15,3 % |
| Schmelzpunkt | 105 - 111 °C |

### Beispiel 4

1 000 g (4,3 val) des uretdiongruppenhaltigen Polyisocyanates aus Beispiel 1 werden unter trockenem Stickstoff auf 80°C erwärmt. Anschließend gibt man innerhalb von 30 min eine Mischung von 457 g (3,4 val) des Estergruppen aufweisenden Diols C 2 und 117 g (0,9 val) 2-Ethyl-1-hexanol zu und rührt bei einer Reaktionstemperatur von max. 105°C bis der NCO-Gehalt des Reaktionsgemisches nach ca. 2 h auf einen Wert von 0,7 % abgesunken ist.

Die Schmelze wird zum Erkalten auf ein Blech gegossen, und man erhält eine erfindungsgemäße Polyadditionsverbindung als praktisch farbloses Festharz mit folgenden Kenndaten:

| | |
|---|---|
| NCO-Gehalt | 0,7 % |
| Uretdiongruppen-Gehalt (ber.) | 12,1 % |
| NCO-Gehalt gesamt | 12,8 % |
| Schmelzpunkt | 82 - 83°C |
| Estergruppen-Gehalt (ber.) | 7,3 % |
| Urethangruppen-Gehalt (ber.) | 16,1 % |

### Beispiel 5

1 000 g (4,3 val) des uretdiongruppenhaltigen Polyisocyanates aus Beispiel 1 werden unter trockenem Stickstoff auf 80°C erwärmt. Anschließend gibt man innerhalb von 30 min eine Mischung von 622 g (3,4 val) des Carbonatgruppen aufweisenden Diols C 3 und 117 g (0,9 val) 2-Ethyl-1-hexanol zu und rührt bei einer Reaktionstemperatur von max. 110°C bis der NCO-Gehalt des Reaktionsgemisches nach etwa 2 h auf einen Wert von 0,5 % abgesunken ist.

Die Schmelze wird zum Erkalten auf ein Blech gegossen, und man erhält eine erfindungsgemäße Polyadditionsverbindung als praktisch farbloses Festharz mit folgenden Kenndaten:

| | |
|---|---|
| NCO-Gehalt | 0,5 % |
| Uretdiongruppen-Gehalt (ber.) | 11,0 % |
| NCO-Gehalt gesamt | 11,5 % |
| Schmelzpunkt | 87 - 89°C |
| Carbonatgruppen-Gehalt (ber.) | 12,3 % |
| Urethangruppen-Gehalt (ber.) | 14,6 % |

### Beispiel 6

1 000 g (4,3 val) des uretdiongruppenhaltigen Polyisocyanates aus Beispiel 1 werden unter trockenem Stickstoff auf 80°C erwärmt. Anschließend gibt man innerhalb von 30 min eine Mischung von 229 g (1,7 val) des Estergruppen aufweisenden Diols C 2, 184 g (1,7 val) des Carbonatgruppen aufweisenden Diols C 4 und 117 g (0,9 val) 2-Ethyl-1-hexanol zu und rührt bei einer Reaktionstemperatur von max. 100°C bis der NCO-Gehalt des Reaktionsgemisches nach etwa 3 h auf einen Wert von 0,8 % abgesunken ist.

Die Schmelze wird zum Erkalten auf ein Blech gegossen, und man erhält eine erfindungsgemäße Polyadditionsverbindung als praktisch farbloses Festharz mit folgenden Kenndaten:

| | |
|---|---|
| NCO-Gehalt | 0,8 % |
| Uretdiongruppen-Gehalt (ber.) | 12,5 % |
| NCO-Gehalt gesamt | 13,3 % |
| Schmelzpunkt | 89 - 91°C |
| Estergruppen-Gehalt (ber.) | 3,8 % |
| Carbonatgruppen-Gehalt (ber.) | 3,3 % |
| Urethangruppen-Gehalt (ber.) | 16,6 % |

### Beispiel 7

1 000 g (5,1 val) eines Uretdion- und Isocyanuratgruppenhaltigen Polyisocyanates auf Basis von 1,6-Diisocyanatohexan (HDI) mit einem Gehalt an freien Isocyanatgruppen von 21,6 %, einer mittleren NCO-Funktionalität von 2,3 und einem Gehalt an Uretdiongruppen (bestimmt durch Heißtitration) von 15,0 % werden unter trockenem Stickstoff auf 80°C erwärmt. Anschließend gibt man innerhalb von 30 min eine Mischung von 113 g (1,5 val) n-Butanol, 295 g (2,5 val) des Estergruppen aufweisenden Diols C 5 und 130 g (1,1 val) 1,6-Hexandiol zu und rührt bei einer Reaktionstemperatur von max. 104°C bis der NCO-Gehalt des Reaktionsgemisches nach ca. 2 h auf einen Wert von 0,7 % abgesunken ist.

Die Schmelze wird zum Erkalten auf ein Blech gegossen, und man erhält eine erfindungsgemäße Polyadditionsverbindung als farbloses Festharz mit folgenden Kenndaten:

| | |
|---|---|
| NCO-Gehalt | 0,7 % |
| Uretdiongruppen-Gehalt (ber.) | 9,8 % |
| NCO-Gehalt gesamt | 10,5 % |
| Schmelzpunkt | 84 - 91°C |
| Estergruppen-Gehalt (ber.) | 3,6 % |
| Urethangruppen-Gehalt (ber.) | 19,6 % |

### Beispiel 8 (Verwendung)

76,0 Gew.-Teile eines hydroxylgruppenhaltigen Polyesters, der aus 66,6 Gew.-Teilen Terephthalsäure, 38,2 Gew.-Teilen Neopentylglykol, 5,3 Gew.-Teilen 1,6-Hexandiol und 4,5 Gew.-Teilen 1,1,1-Trimethylolpropan hergestellt wurde und eine OH-Zahl von 50 und einen Schmelzbereich (bestimmt nach der Differential-Thermoanalyse) von 55 bis 60°C aufweist, werden mit 22,5 Gew.-Teilen der gemäß Beispiel 1 erhaltenen erfindungsgemäßen Polyadditionsverbindung, entsprechend einem Äquivalentverhältnis von Gesamt-NCO zu OH von 1:1, 1,0 Gew.-Teilen eines handelsüblichen Verlaufsmittels (®Perenol F 30 P; Fa. Henkel, Düsseldorf) und 0,5 Gew.-Teilen Zinn(II)-octoat als Katalysator gründlich gemischt und anschließend mit Hilfe eines Buss Cokneters vom Typ PLK 46 bei 150 U/min und einer Gehäusetemperatur von 40°C im Einzugsbereich sowie an der Welle bzw. von 80°C im Verfahrensteil homogenisiert, wobei Massetemperaturen von 95 bis 100°C erreicht werden. Die erstarrte Schmelze wird mit Hilfe einer Sichtermühle ACM 2 (Fa. Hosokawa Mikropul) mit einem 90 µm Sieb gemahlen und gesiebt. Das so erhaltene Pulver wird mit einer ESB Becherpistole bei einer Hochspannung von 70 kV auf ein entfettetes Stahlblech gespritzt und jeweils 30 min bei 160°C und 170°C zu einer glattverlaufenden transparenten Beschichtung ausgehärtet.

Zum Vergleich wird analog aus 79,1 Gew.-Teilen des gleichen hydroxylgruppenhaltigen Polyesters mit 19,4 Gew.-Teilen der gemäß Vergleichsbeispiel 3 erhaltenen Polyadditionsverbindung, 1,0 Gew.-Teilen eines handelsüblichen Verlaufsmittels (® Perenol F 30 P: Fa. Henkel, Düsseldorf) und 0,5 Gew.-Teilen Zinn(II)-octoat als Katalysator ein Pulverklarlack hergestellt, auf ein entfettetes Stahlblech gespritzt und ebenfalls jeweils 30 min bei 160 und 170°C ausgehärtet. Das Äquivalentverhältnis von Gesamt-NCO zu OH liegt ebenfalls bei 1:1.

Bei Schichtdicken von ca. 60 µm werden folgende lacktechnische Eigenschaften gefunden:

Pulverlack mit Polyadditionsverbindung aus

| | | Beispiel 1 | | Vergleichsbeispiel 3 | |
|---|---|---|---|---|---|
| | | 30' 160°C | 30' 170°C | 30' 160°C | 30' 170°C |
| ET^{a)} | | > 9 | > 9 | 0,6 | > 9 |
| | | | | | |
| Glanz^{b)} | 20° | 87 | 88 | 60 | 64 |
| | 60° | 104 | 105 | 100 | 100 |
| | | | | | |
| Ac^{c)} | DH | 50 | 50 | 50 | 50 |
| | Urteil | 2 | 2 | 2 m | 2 m |

| | | | | | |
|---|---|---|---|---|---|
| ^{a)} ET = Erichsentiefung nach DIN 53156 | | | | | |
| ^{b)} Glanz = Glanz nach Gardner; 20° bzw. 60° Reflexionswinkel | | | | | |
| ^{c)} AC = Acetontest; DH = Anzahl der Doppelhübe mit getränktem Wattebausch Urteil= 0 = Film intakt 1 = Filmoberfläche angeweicht 2 = Film bis zum Untergrund angequollen m = matt (Glanzverlust) | | | | | |

Der Vergleich zeigt, daß mit Hilfe der erfindungsgemäßen Polyadditionsverbindung bereits bei niedrigerer Einbrenntemperatur ein vollvernetzter, elastischer Lackfilm erhalten wird, der sich außerdem durch einen besseren Verlauf und höheren Glanz auszeichnet

### Beispiele 9 - 12

Aus dem in Beispiel 8 beschriebenen hydroxylgruppenhaltigen Polyester, einem handelsüblichen Verlaufsmittel (® Acronal F 4; Fa. BASF) und einem Weißpigment R-KB 4 (TiO₂) wurden unter Verwendung der Polyadditionsverbindungen gemäß der Beispiele 4, 5 und 6 sowie des Vergleichsbeispiels 3 nach dem in Beispiel 8 beschriebenen Verfahren Weißlacke folgender Zusammensetzung (Gew.-Teile) hergestellt (Äquivalentverhältnis von Gesamt-NCO zu OH jeweils 1:1):

| Beispiel | | 9 | 10 | 11 | 12 (Vergleich) |
|---|---|---|---|---|---|
| Polyester gemäß Beispiel 8 | | 46,3 | 45,2 | 46,7 | 47,7 |
| Polyadditionsverbindung gemäß | Beispiel 4 | 13,1 | - | - | - |
| | Beispiel 5 | - | 14,2 | - | - |
| | Beispiel 6 | - | - | 12,7 | - |
| | Vergleichs-Beispiel 3 | - | - | - | 11,7 |
| Acronal 4 F | | 0,6 | 0,6 | 0,6 | 0,6 |
| R-KB 4 (TiO₂) | | 40,0 | 40,0 | 40,0 | 40,0 |
| | | 100,0 | 100,0 | 100,0 | 100,0 |

Die Pulver werden mit einer ESB Becherpistole bei einer Hochspannung von 70 kV auf entfettete Stahlbleche gespritzt und jeweils 30 min bei 170°C ausgehärtet.

Bei Schichtdicken von 60 ± 5 µm werden folgende lacktechnische Eigenschaften gefunden:

| | | Beispiel 9 | Beispiel 10 | Beispiel 11 | Beispiel 12 (Vergleich) |
|---|---|---|---|---|---|
| ET^{a)} | | > 9 | > 9 | > 9 | 4,6 |
| | | | | | |
| Glanz^{b)} | 20° | 73 | 72 | 76 | 47 |
| | 60° | 90 | 90 | 91 | 82 |
| | | | | | |
| Ac^{c)} | DH | 50 | 50 | 50 | 50 |
| | Urteil | 2 m | 2 m | 2 m | 2 m |

| | | | | | |
|---|---|---|---|---|---|
| ^{a), b), c)}: siehe Fußnote Beispiel 8 | | | | | |

Bei Verwendung der erfindungsgemäßen Polyadditionsverbindungen erhält man Beschichtungen, die sich gegenüber dem Vergleich durch höhere Elastizität und Glanzwerte auszeichnen.

### Beispiel 13

Aus 61,9 Gew.-Teilen eines hydroxylgruppenhaltigen Polyacrylates, bestehend aus 37,0 Gew.-Teilen Methylmethacrylat, 24,0 Gew.-Teilen n-Butylmethacrylat, 18,9 Gew.-Teilen Styrol, 19,1 Gew.-Teilen 2-Hydroxyethylmethacrylat und 1,0 Gew.-Teilen Acrylsäure, mit einer OH-Zahl von 70 und einem Schmelzbereich (bestimmt nach der Differential-Thermoanalyse) von 62 bis 66°C, 37,1 Gew.-Teilen der gemäß Beispiel 7 erhaltenen erfindungsgemäßen Polyadditionsverbindung (NCO gesamt/OH-Äquivalentverhältnis = 1,2:1) sowie 1,0 Gew.-Teilen eines handelsüblichen Verlaufsmittels (® Perenol F 30 P; Fa. Henkel, Düsseldorf) wird nach der in Beispiel 8 beschriebenen Methode ein Pulverklarlack formuliert, auf ein entfettetes Stahlblech gespritzt und jeweils 30 min. bei Temperaturen von 150, 160 und 170°C zu einer glattverlaufenden transparenten Beschichtung eingebrannt

Bei einer Schichtdicke von ca. 60 µm werden folgende lacktechnische Eigenschaften gefunden:

| | | 30' 150°C | 30' 160°C | 30' 170°C |
|---|---|---|---|---|
| ET^{a)} | | > 9 | > 9 | > 9 |
| | | | | |
| Glanz^{b)} | 20° | 82 | 84 | 82 |
| | 60° | 97 | 98 | 97 |
| | | | | |
| Ac^{c)} | DH | 50 | 50 | 50 |
| | Urteil | 2 m | 2 | 1 |

| | | | | |
|---|---|---|---|---|
| ^{a), b), c)}: siehe Fußnote Beispiel 8 | | | | |

## Patentansprüche

1. Polyadditionsverbindungen, die unterhalb von 40°C in fester und oberhalb von 125°C in flüssiger Form vorliegen und
a) einen Gehalt an freien Isocyanatgruppen (berechnet als NCO; Molekulargewicht = 42) von 0 bis 2 Gew.-%,
b) einen Gehalt an Uretdiongruppen (berechnet als C₂N₂O₂; Molekulargewicht = 84) von 3 bis 16 Gew.-% und
c) einen Gehalt an Urethangruppen (berechnet als -NH-CO-O-; Molekulargewicht = 59) von 10 bis 22 Gew.-% aufweisen,
dadurch gekennzeichnet, daß die Polyadditionsverbindungen zusätzlich
d) einen Gehalt an Carbonsäureestergruppen (berechnet als -CO-O-; Molekulargewicht = 44) von 0 bis 20 Gew.-%
und/oder
e) einen Gehalt an Carbonatgruppen (berechnet als -O-CO-O-; Molekulargewicht = 60) von 0 bis 25 Gew.-% aufweisen,
mit der Maßgabe, daß der Gesamtgehalt an Carbonsäureester- und Carbonatgruppen mindestens 1 Gew.-% beträgt.

2. Verfahren zur Herstellung von Polyadditionsverbindungen gemäß Anspruch 1, dadurch gekennzeichnet, daß man
A) Uretdiongruppen aufweisende Polyisocyanate einer mittleren Isocyanatfunktionalität von mindestens 2,0, gegebenenfalls unter Mitverwendung von
B) weiteren Diisocyanaten in einer Menge von bis zu 70 Gew.-%, bezogen auf das Gesamtgewicht der Komponenten A) und B), mit
C) Estergruppen und/oder Carbonatgruppen aufweisenden Diolen eines mittleren Molekulargewichtes von 134 bis 1 200, gegebenenfalls unter gleichzeitiger Mitverwendung von
D) Estergruppen- und Carbonatgruppen-freien Diolen eines Molekulargewichtes von 62 bis 300 in einer Menge von bis zu 80 Gew.-%, bezogen auf das Gesamtgewicht der Komponenten C) und D), und/oder gegebenenfalls
E) weiteren gegenüber Isocyanatgruppen reaktiven, monofunktionellen Verbindungen in einer Menge von bis zu 40 Gew.-%, bezogen auf das Gesamtgewicht der Komponenten C), D) und E),
unter Einhaltung eines Äquivalentverhältnisses von Isocyanatgruppen zu gegenüber Isocyanaten reaktiven Gruppen von 1,2:1 bis 0,6:1 miteinander umsetzt, wobei im übrigen Art und Mengenverhältnisse der genannten Ausgangsstoffe so gewählt werden, daß die resultierenden Verfahrensprodukte den oben unter a) bis e) genannten Bedingungen entsprechen.

3. Verfahren gemäß Anspruch 2, dadurch gekennzeichnet, daß man als Uretdiongruppen aufweisende Polyisocyanate A) solche auf Basis von Diisocyanaten mit aliphatisch und/oder cycloaliphatisch gebundenen Isocyanatgruppen oder Gemische solcher Polyisocyanate verwendet.

4. Verfahren gemäß Anspruch 2 und 3, dadurch gekennzeichnet, daß man als Uretdiongruppen aufweisende Polyisocyanate A) solche auf Basis von 1,6-Diisocyanatohexan und/oder 1-Isocyanato-3,3,5-trimethyl-5-isocyanatomethylcyclohexan oder Gemische solcher Polyisocyanate verwendet.

5. Verwendung der Polyadditionsverbindungen gemäß Anspruch 1 als Ausgangskomponente bei der Herstellung von Polyurethankunststoffen.

6. Verwendung gemäß Anspruch 5 als Vernetzerkomponente in Hitze-vernetzbaren Zweikomponenten-Polyurethan-Pulverlacken bei der Beschichtung beliebiger hitzeresistenter Substrate nach den Methoden der Pulverlacktechnologie.

## Claims

1. Polyaddition compounds which are in solid form below 40°C and in liquid form above 125°C and have
a) a content of free isocyanate groups (calculated as NCO; molecular weight = 42) of 0 to 2 wt.%,
b) a content of uretidione groups (calculated as C₂N₂O₂; molecular weight = 84) of 3 to 16 wt.% and
c) a content of urethane groups (calculated as -NH-CO-O-; molecular weight = 59) of 10 to 22 wt.%,
characterised in that the polyaddition compounds additionally have
d) a content of carboxylic acid ester groups (calculated as -CO-O-; molecular weight = 44) of 0 to 20 wt.%
and/or
e) a content of carbonate groups (calculated as -O-CO-O-; molecular weight = 60) of 0 to 25 wt.%,
providing that the total content of carboxylic acid ester and carbonate groups is at least 1 wt.%.

2. Process for the production of polyaddition compounds according to claim 1, characterised in that
A) polyisocyanates containing uretidione groups and having an average isocyanate functionality of at least 2.0, optionally together with
B) further diisocyanates in a quantity of up to 70 wt.%, relative to the total weight of components A) and B), are reacted with
C) diols containing ester groups and/or carbonate groups and having an average molecular weight of 134 to 1200, optionally simultaneously together with
D) diols containing neither ester groups nor carbonate groups and having a molecular weight of 62 to 300 in a quantity of up to 80 wt.%, relative to the total weight of components C) and D), and/or optionally
E) further monofunctional compounds reactive towards isocyanate groups in a quantity of up to 40 wt.%, relative to the total weight of components C), D) and E),
while maintaining an equivalent ratio of isocyanate groups to groups reactive towards isocyanate groups of 1.2:1 to 0.6:1, wherein the nature and quantity ratios of the stated starting materials are moreover selected in such a manner that the resultant products of the process fulfil the conditions stated above under a) to e).

3. Process according to claim 2, characterised in that the polyisocyanates A) containing uretidione groups which are used are those based on diisocyanates having aliphatically and/or cycloaliphatically attached isocyanate groups or mixtures of such polyisocyanates.

4. Process according to claims 2 or 3, characterised in that the polyisocyanates A) containing uretidione groups which are used are those based on 1,6-diisocyanatohexane and/or 1-isocyanato-3,3,5-trimethyl-5-isocyanatomethylcyclohexane or mixtures of such polyisocyanates.

5. Use of the polyaddition compounds according to claim 1 as a starting component in the production of polyurethane plastics.

6. Use according to claim 5 as a crosslinking component in thermally crosslinkable two-component polyurethane powder coatings for coating any desired heat-resistant substrates using the methods of powder coating technology.

## Revendications

1. Composés de polyaddition qui sont présents sous forme solide aux températures inférieures à 40°C et sous forme liquide aux températures supérieures à 125°C et qui présentent
a) une teneur en groupes isocyanate libres (calculée en NCO; masse moléculaire = 42) de 0 à 2 % en masse,
b) une teneur en groupes uretdione (calculée en C₂N₂O₂ ; masse moléculaire = 84) de 3 à 16 % en masse et
c) une teneur en groupes uréthane (calculée en -NH-CO-O- ; masse moléculaire = 59) de 10 à 22 % en masse,
caractérisés en ce que les composés de polyaddition comportent en outre
d) une teneur en groupes ester d'acide carboxylique (calculée en -CO-O- ; masse moléculaire = 44) de 0 à 20 % en masse
et/ou
e) une teneur en groupes carbonate (calculée en -O-CO-O- ; masse moléculaire = 60) de 0 à 25 % en masse,
à condition que la teneur totale en groupes ester d'acide carboxylique et carbonate soit d'au moins 1 % en masse.

2. Procédé de préparation de composés de polyaddition selon la revendication 1, caractérisé en ce que l'on fait réagir entre eux
A) des polyisocyanates comportant des groupes uretdione ayant une fonctionnalité isocyanate moyenne d'au moins 2,0, éventuellement en utilisant conjointement
B) d'autres diisocyanates en une quantité pouvant atteindre 70 % en masse, par rapport à la masse totale des constituants A) et B), avec
C) des diols comportant des groupes ester et/ou des groupes carbonate d'une masse moléculaire moyenne de 134 à 1 200, éventuellement en utilisant conjointement simultanément
D) des diols exempts de groupes ester et de groupes carbonate d'une masse moléculaire de 62 à 300 en une quantité pouvant atteindre 80 % en masse par rapport à la masse totale des constituants C) et D), et/ou éventuellement
E) d'autres composés monofonctionnels réactifs vis-à-vis des groupes isocyanate en une quantité pouvant atteindre 40 % en masse par rapport à la masse totale des constituants C), D) et E),
en respectant un rapport équivalent des groupes isocyanate aux groupes réactifs vis-à-vis des isocyanates de 1,2:1 à 0,6:1, en choisissant en outre le type et les proportions quantitatives des produits de départ cités de manière que les produits du procédé résultants correspondent aux conditions citées ci-dessus en a) à e).

3. Procédé selon la revendication 2, caractérisé en ce que l'on utilise comme polyisocyanates A) comportant des groupes uretdione des polyisocyanates à base de diisocyanates avec des groupes isocyanate liés de manière aliphatique et/ou cycloaliphatique ou des mélanges de tels polyisocyanates.

4. Procédé selon les revendications 2 et 3, caractérisé en ce que l'on utilise comme polyisocyanates A) comportant des groupes uretdione des polyisocyanates à base de 1,6-diisocyanatohexane et/ou de 1-isocyanato-3,3,5-triméthyl-5-isocyanatométhylcyclohexane ou des mélanges de tels polyisocyanates.

5. Utilisation des composés de polyaddition selon la revendication 1 comme constituant de départ pour la préparation de matières synthétiques polyuréthanes.

6. Utilisation selon la revendication 5 comme constituant réticulant dans des peintures en poudre de polyuréthanes à deux constituants réticulables à la chaleur pour le revêtement de substrats résistant à la chaleur quelconques selon les méthodes de la technologie des peintures en poudre.
